**Europäisches Patentamt**

(19) **European Patent Office**

**Office européen des brevets**

(11) Publication number : **0 460 742 B1**

(12) # EUROPEAN PATENT SPECIFICATION

(45) Date of publication of patent specification :
**12.01.94 Bulletin 94/02**

(51) Int. Cl.⁵ : **A21D 13/02, A23L 1/015**

(21) Application number : **91201313.3**

(22) Date of filing : **31.05.91**

(54) Improved bran.

(30) Priority : **05.06.90 EP 90306025**

(43) Date of publication of application :
**11.12.91 Bulletin 91/50**

(45) Publication of the grant of the patent :
**12.01.94 Bulletin 94/02**

(84) Designated Contracting States :
**AT BE CH DE DK ES FR GB GR IT LI NL SE**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Davies, Alan Phillip**
**30 Colchester Way**
**Bedford MK41 8BG (GB)**
Inventor : **Ingman, Simon John**
**95 Dingle Road**
**Rushden, Northants (GB)**

(74) Representative : **Elliott, Peter William et al**
**Unilever N.V. Patent Division P.O. Box 137**
**NL-3130 AC Vlaardingen (NL)**

## Description

As is known in the prior art a bran can be obtained from a cereal by milling the cereal and separating the milled product into three fractions, i.e. a white flour, a bran and the germ. The bran contains most of the fibres, originally present in the cereal. Attempts to use the bran in bakery compositions were not very successful so far, because of the fact that the baked products made from those compositions did not possess a good specific volume (= S.V.).

We have now found a method by which the bran can be improved, so that the improved bran can be used successfully in bakery compositions, while the S.V. of the baked products made from these compositions is satisfactory. Therefore our invention in the first place concerns with a method for improving the properties of a cereal bran, which is characterised in that the bran is extracted with an aqueous solution of an alcohol with 1 to 4 carbon atoms, preferably ethanol and preferably containing more than 50 wt% ethanol and more preferably 80-99.9 wt% ethanol, after which the improved bran is separated from the extract. By carrying out this extraction some ingredients, which are disadvantageous for baking performance of compositions containing the bran are removed. We found that these components mainly consist of carbohydrates and lipid/oil, whereas only small amounts of protein and ash are present in these components.

From DE 3.133.471 it is known to prepare a flour additive in particular obtained from maize. Therefore a milled cereal is treated with a polar solvent, e.g. a small alcohol, such as ethanol or isopropanol, at about the boiling point of the solvent. In this way proteins and lipids are removed from the remaining solid. The solid can be used as a flour-additive. However nothing is disclosed about improving a bran and recombing the improved bran with white flour.

The extraction of the bran is preferably carried out by using at least a weight ratio alcoholic solvent: bran of more than 2, most preferably 2.5 - 3.5. The best results are obtained, when the bran is subjected to several extractions steps. In fact we use 2-10, preferably 3-4 extraction steps.

The bran, that can be used in our process, can be obtained from any cereal, however in practice we use brans obtained from wheat, oat, rye and rice.

In order to obtain the bran, that can be treated according to the process of the invention a cereal is first milled . The milled product is separated in the usual way into a white flour fraction and into a bran. The bran is extracted with 2 or 3 times its weight with an 80% aqueous alcohol. This extraction procedure is repeated for another two times, the bran being separated from the extract after each extraction. This way an improved bran is obtained. This improved bran is also part of our invention and can be described as a standard bran from which the fraction, that is extractable with an aqueous alcohol, is removed. The improved bran according to the invention can be used to make a cereal fibre enriched flour (= modified whole meal) from which a batter can be prepared.

The improved bran can be mixed with the white flour, that is separated from the bran when the milled product is separated, but it is of course also possible to mix the improved bran with a white flour which is obtained from another cereal in a separate process. Examples of white flours that can be used are Snowdon® (= chlorinated flour), Roller White® and Stronghold®, which are all obtained from wheat. Advantageously the milled product is separated into fractions of 70-80 wt% white flour and 30-20 wt% bran plus the germ. The bran is treated according to the invention and the improved bran is remixed with the white flour.

The invention therefore also covers a modified whole meal, that comprises a white flour and an improved bran, in particular comprising 70-80 wt% white flour and 30-20 wt% of the bran according to the invention. Hereby the bran can originate from the same cereal as the white flour or from a different cereal.

Batters can be made by using the improved bran or the modified whole meal, in which the improved bran is incorporated.
These batters further contain the usual ingredients.

From the batters baked food products, in particular cakes, can be made. These baked products possess a specific volume, as measured by the rape seed displacement method and calculated as volume per gram cake, which is about the same as the S.V. for a cake in which no bran is present.

However, when we make a batter, and from that batter a cake in which we use a standard (untreated) bran in the same amount as we use our improved bran, we obtain baked products with a very low S.V.

This will be illustrated by the following examples:

Example I

A dry mix was made from:

| | | | |
|---|---|---|---|
| 644 | g | Snowdon®-flour | 42.9% |
| 586 | g | Icing sugar | 39.1% |
| 112 | g | Spray dried egg | 7.5% |

| | | | |
|---|---|---|---|
| 39 | g | Skimmed milk powder | 2.6% |
| 58 | g | B.V. 40 (= emulsifier) | 3.9% |
| 23 | g | Puron® (= baking powder) | 1.5% |
| 23 | g | NaHCO$_3$ | 1.5% |
| 5.4 | g | Salt | 0.4% |
| 7.8 | g | Albumen | 0.5% |

804 ml water (= 35%) is added to the dry mix and mixed in a Hobart A 120 for 10 minutes, using a wire whisk. 200 g of the batter is baked at 180°C in a standard cake tin for 20 minutes.

The S.V. of the cake was measured after cooling (24 hours) using the rape seed displacement method. The S.V. of this cake was 4.5

Example II

Example I was repeated but the Snowdon® flour was replaced by a non chlorinated flour, containing modified bran.

Crude fibre content of the flour was 2.0 wt%, which is equivalent to that of whole meal flour.

In table I a review is given of the S.V. of cakes obtained when using different kinds of flours (Snowdon®, Roller White® and Stronghold®) per se or in combination with different brans (fine, superfine, extruded) or in combination with extracted brans (extruded and superfine).

In table II a survey is given of the crude fibre content of the different types of brans, whereas in table III the amount of material that is removed in the extraction, using different aqueous ethanol solvent systems is given.

The level of Spray Dried Egg in table I varies with the different flours. When a bran was present this level was increased to 10.2 wt%.

## Table I

### Influence of bran on S.V. of cake

| Type of flour | Type of bran | % Egg | S.V. |
|---|---|---|---|
| Snowdon® | -- | 7.5 | 4.6 |
| Snowdon® | fine | 10.2 | 2.9 |
| Roller White® | -- | 7.5 | 3.0 |
| Roller White® | fine | 7.5 | 3.5 |
| Roller White® | fine | 10.2 | 3.7 |
| Roller White® | superfine | 10.2 | 3.5 |
| Roller White® | extruded | 10.2 | 3.6 |
| Roller White®* | extruded, 99.9% ethanol extracted | 10.2 | 3.8 |
| Roller White®* | extruded, 90% ethanol extracted | 10.2 | 4.2 |
| Roller White®* | superfine, 90% ethanol extracted | 10.2 | 4.0 |
| Stronghold® | -- | 7.5 | 4.1 |
| Stronghold® | fine | 10.2 | 3.6 |
| Stronghold®* | superfine, 90% ethanol extracted | 10.2 | 4.2 |

* according to the invention.

3

## Table II

### Crude Fibre-content of bran fractions

| Bran | heat treated cereal | native cereal |
|------|---------------------|---------------|
| coarse | 7.7% | not available |
| fine | 6.6% | 7.6% |
| superfine | 3.6% | 6.7% |
| extruded | not available | 8.8% |

## Table III

### Amount of material removed

| Solvent | Removed |
|---------|---------|
| water | 8.9 |
| ethanol 99.9% | 3.0 |
| ethanol 90 % | 3.2 |
| ethanol 80 % | 5.0 |
| ethanol 55 % | 7.4 |

**Claims**

1. Method for improving the properties of a cereal bran characterised in that the bran is extracted with an aqueous solution of an alcohol with 1 to 4 carbon atoms, after which the improved bran is separated from the extract.

2. Method according to claim 1, wherein the alcohol is ethanol.

3. Method according to claims 1 and 2, wherein an aqueous alcohol with at least 50 wt% ethanol is used.

4. Method according to claim 3, wherein an 80-99.9 wt% aqueous ethanol is used.

5. Method according to claim 1, wherein a weight ratio alcoholic solvent: bran of more than 2 is used.

6. Method according to claim 1, wherein several extraction steps of the bran are proceeded.

7. Method according to claim 1, wherein a cereal bran from wheat, oat, rye or rice is used.

8. Method according to claim 1, wherein first a cereal is milled, a white flour, a bran and germ are separated from the milled cereal, after which the bran is treated according to claims 1-6.

9. Method for producing a cereal fibre enriched flour (modified whole meal) by milling a cereal, separating the milled product into white flour and bran, extracting the bran with an aqueous alcohol and mixing the improved bran with the white flour.

10. Method according to claim 9, wherein the milled cereal is separated in fractions of 70-80 wt% white flour and 30-20 wt% bran.

11. Improved bran comprising a standard bran from which the fraction that is extractable with an aqueous alcohol with 1 to 4 carbon atoms is removed.

12. Modified whole meal, comprising the bran according to claim 11 and white flour.

13. Modified whole meal according to claim 12 comprising 70-80 wt% white flour and 30-20 wt% bran.

14. Modified whole meal according to claims 12-13, wherein the white flour and the bran originate from the same cereal.

15. Modified whole meal according to claims 12-13, wherein the white flour and the bran originate from different cereals.

16. Batter containing the improved bran according to claim 11 or the modified whole meal according to claims 12-15.

17. Baked food products, which are at least partly made from the improved bran according to claim 11, the modified whole meal according to claims 12-15 or the batter according to claim 16.


**Patentansprüche**

1. Verfahren zur Verbesserung der Eigenschaften einer Getreidekleie, dadurch gekennzeichnet, daß die Kleie mit einer wäßrigen Lösung eines Alkohols mit 1 bis 4 Kohlenstoffatomen extrahiert wird, wonach die verbesserte Kleie von dem Extrakt abgetrennt wird.

2. Verfahren nach Anspruch 1, wonach der Alkohol Ethanol ist.

3. Verfahren nach Anspruch 1 und 2, wonach wäßriger Alkohol mit mindestens 50 Gew.-% Ethanol verwendet wird.

4. Verfahren nach Anspruch 3, wonach ein 80-99,9 gew.-%iges wäßriges Ethanol verwendet wird.

5. Verfahren nach Anspruch 1, wonach das Gew.-Verhältnis von alkoholischem Lösungsmittel: Kleie mit mehr als 2 gewählt wird.

6. Verfahren nach Anspruch 1, wonach mehrere Schritte der Extraktion der Kleie durchgeführt werden.

7. Verfahren nach Anspruch 1, wonach eine Getreidekleie von Weizen, Hafer, Roggen oder Reis verwendet wird.

8. Verfahren nach Anspruch 1, wonach zuerst ein Getreide gemahlen wird, ein Weißmehl, eine Kleie und Keimlinge von dem gemahlenen Getreide abgetrennt werden, wonach die Kleie gemäß den Ansprüchen 1 bis 6 behandelt wird.

9. Verfahren zur Herstellung eines an Getreidefasern angereicherten Mehls (modifiziertes Vollkornmehl) durch Mahlen eines Getreides, Auftrennen des gemahlenen Produktes in Weißmehl und Kleie, Extrahieren der Kleie mit einem wäßrigen Alkohol und Mischen der verbesserten Kleie mit dem Weißmehl.

10. Verfahren nach Anspruch 9, wonach das gemahlene Getreide in Fraktionen von 70 bis 80 Gew.-% Weißmehl und 30 bis 20 Gew.-% Kleie aufgetrennt wird.

11. Verbesserte Kleie, umfassend eine Standardkleie, von der die Fraktion, die mit einem wäßrigen Alkohol mit 1 bis 4 Kohlenstoffatomen extrahierbar ist, entfernt worden ist.

12. Modifiziertes Vollkornmehl, umfassend die Kleie gemäß Anspruch 11 und Weißmehl.

13. Modifiziertes Vollkornmehl gemäß Anspruch 12, umfassend 70 bis 80 Gew.-% Weißmehl und 30 bis 20 Gew.-% Kleie.

**14.** Modifiziertes Vollkornmehl gemäß den Ansprüchen 12 und 13, in welchem das Weißmehl und die Kleie von dem gleichen Getreide stammen.

**15.** Modifiziertes Vollkornmehl gemäß Anspruch 12 und 13, in dem das Weißmehl und die Kleie von unterschiedlichem Getreide stammen.

**16.** Teig, enthaltend die verbesserte Kleie gemäß Anspruch 11 oder das modifizierte Vollkornmehl gemäß den Ansprüchen 12 bis 15.

**17.** Gebackene Lebensmittelprodukte, die zumindest teilweise von der verbesserten Kleie gemäß Anspruch 11, dem modifizierten Vollkornmehl gemäß den Ansprüchen 12 bis 15 oder dem Teig gemäß Anspruch 16 hergestellt worden sind.

**Revendications**

**1.** Procédé pour améliorer les propriétés d'un son de céréale, caractérisé en ce que le son est extrait avec une solution aqueuse d'un alcool ayant de 1 à 4 atomes de carbone, suite à quoi le son amélioré est séparé de l'extrait.

**2.** Le procédé selon la revendication 1, dans lequel l'alcool est de l'éthanol.

**3.** Le procédé selon les revendications 1 et 2, dans lequel on utilise une solution aqueuse d'alcool avec au moins 50 % en masse d'éthanol.

**4.** Le procédé selon la revendication 3, dans lequel on utilise une solution aqueuse d'éthanol à 80 - 99,9 % en masse.

**5.** Le procédé selon la revendication 1, dans lequel on utilise un rapport en masse entre le solvant alcoolique et le son qui est supérieur à 2.

**6.** Le procédé selon la revendication 1, dans lequel on procède à plusieurs étapes d'extraction du son.

**7.** Le procédé selon la revendication 1, dans lequel on utilise un son de céréale de blé, d'avoine, de seigle ou de riz.

**8.** Le procédé selon la revendication 1, dans lequel on moud tout d'abord une céréale, on sépare une farine blanche, un son et le germe de la céréale moulue, suite à quoi le son est traité selon les revendications 1 à 6.

**9.** Procédé de production d'une farine de céréale enrichie en fibres (farine complète modifiée) en moulant une céréale, en séparant le produit moulu en farine blanche et son, en extrayant le son avec une solution aqueuse d'alcool et en mélangeant le son amélioré avec la farine blanche.

**10.** Le procédé selon la revendication 9, dans lequel la céréale moulue est séparée en fractions de 70 à 80 % en masse de farine blanche et de 30 à 20 % en masse de son.

**11.** Son amélioré comprenant un son normal duquel est enlevée la fraction pouvant être extraite avec une solution aqueuse d'alcool ayant 1 à 4 atomes de carbone.

**12.** Farine complète modifiée, comprenant le son en accord avec la revendication 11 et de la farine blanche.

**13.** La farine complète modifiée selon la revendication 12, comprenant 70 à 80 % en masse de farine blanche et 30 à 20 % en masse de son.

**14.** La farine complète modifiée selon les revendications 12 et 13, dans laquelle la farine blanche et le son proviennent de la même céréale.

**15.** La farine complète modifiée selon les revendication 12 et 13, dans laquelle la farine blanche et le son proviennent de céréales différentes.

16. Pâte lisse contenant le son amélioré selon la revendication 11 ou la farine complète modifiée selon les revendications 12 à 15.

17. Produits alimentaires cuits, qui sont au moins partiellement confectionnés à partir du son amélioré selon la revendication 11, de la farine complète modifiée selon les revendications 12 à 15 ou de la pâte lisse selon la revendication 16.